# EUROPEAN PATENT APPLICATION

(11) **EP 3 562 160 A1**
(43) Date of publication of application: **30.10.2019**
(21) Application number: 17882573.3
(22) Date of filing: 13.12.2017
(51) Int. Cl.: H04N 19/70, H04N 19/82, H04N 19/86

(54) **ENCODING DEVICE, ENCODING METHOD, AND PROGRAM, AND DECODING DEVICE, DECODING METHOD, AND PROGRAM**

(30) Priority: 22.12.2016 JP 2016249173
(71) Applicant: Canon Kabushiki Kaisha, Tokyo 146-8501 (JP)
(72) Inventor: SHIMA, Masato, Tokyo 146-8501 (JP)
(74) Representative: Spurr, Andrew Jonathan
(86) International application number: PCT/JP2017/044662
(87) International publication number: WO 2018/116924

(57) **Abstract**

When in-loop filtering is performed with respect to pixels striding a discontinuous tile boundary, there is a possibility that an image quality degradation is caused by the filtering processing as a result. On the other hand, when the filtering processing is unconditionally invalidated with respect to the pixels striding the tile boundary, an issue occurs that the in-loop filter cannot be applied to a continuous tile boundary where an image quality improvement can be normally expected by the in-loop filter processing. To address this issue, a coding apparatus for performing coding of an image including a plurality of tiles includes determining means for determining, with respect to a plurality of boundaries constituted by the plurality of tiles, whether or not filter processing is performed on pixels adjacent to the boundaries, and coding means for performing coding of control information indicating whether or not the filter processing is performed on the pixels adjacent to the boundaries in accordance with a determining by the determining means with respect to at least two of the plurality of boundaries.

## Description

### Technical Field

The present invention relates to a coding apparatus, a coding method and a program, a decoding apparatus, a decoding method and a program, and coded image data, and particularly relates to filtering processing on a block boundary.

### Background Art

As a coding method for compression recording of a moving image, an HEVC (High Efficiency Video Coding) coding method (hereinafter, referred to as HEVC) has been known. A technique called Tile (tiles) with which one frame is divided into a plurality of rectangular areas to enable parallel processing for coding and decoding and the like is adopted for the HEVC. When the tiles are used, an increase in speed based on the parallel processing for the coding and the decoding can be realized, and also memory capacities included in an image coding apparatus and an image decoding apparatus can be reduced.

In addition, to improve an image quality of the image after the coding in the HEVC, in-loop filter processing such as deblocking filter or sample adaptive offset is adopted. Although such in-loop filter processing can also be applied to pixels striding a tile boundary, when the in-loop filter processing is applied to the pixels striding the tile boundary, an issue may be caused on the parallel processing for the coding and the decoding in some cases. For this reason, a syntax element of loop_filter_across_tiles_enabled_flag with which it is possible to choose whether or not the in-loop filter processing is applied to the pixels striding the tile boundary is adopted in the HEVC. That is, it is designed that, in a case where the above-described syntax element is 1, the application of the in-loop filter to the tile boundary is enabled, and in the case of 0, the application of the in-loop filter to the tile boundary is prohibited. According to this, the above-described syntax element can be set as 0 in a case where an importance is placed on parallel implementation, and the above-described syntax element can be set as 1 in a case where an importance is placed on an image quality on the tile boundary.

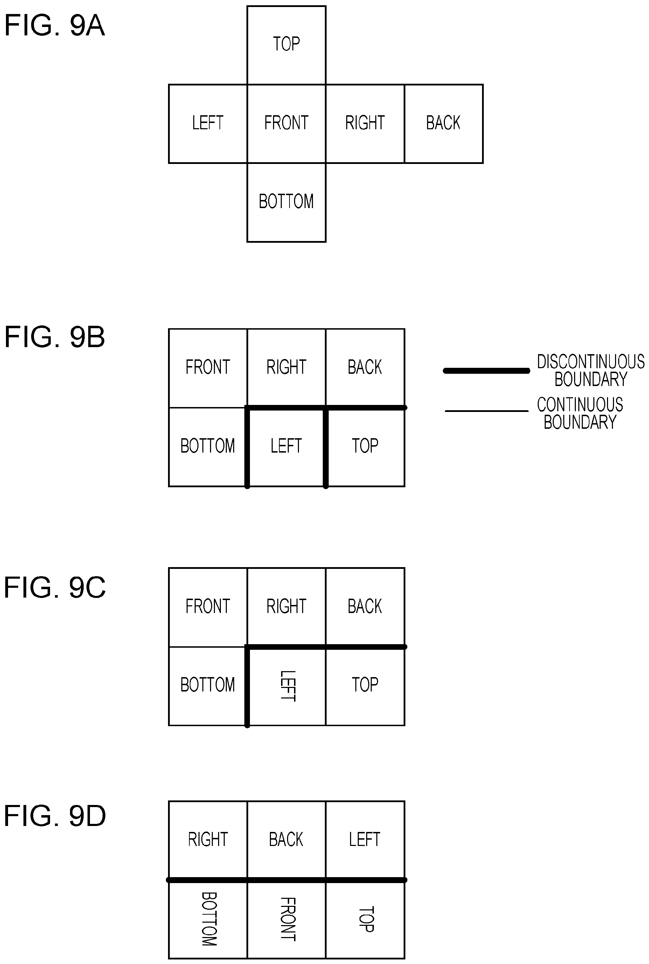

In recent years, a use case where a 360° video is captured by a plurality of cameras, and the captured image is subjected to compression and coding has been generated along with a development in a VR (Virutal Reality) technology. As a capturing method for the 360° video, a technique for capturing images in respective directions of top, bottom, left, right, front, and back by six cameras to be combined with one another has been proposed (NPL 1). The thus captured images are set as one image by rearranging the captured six images to be combined with one another and subjected to the compression and the coding. With regard to the rearrangement, a technique for arranging so as to develop a die as illustrated in Fig. 9A and a technique for further rearranging into a rectangle such that the area of the image after the combination becomes the smallest as illustrated in Figs. 9B to 9D have been under review (NPL 2). According to the technique as illustrated in Fig. 9A, boundaries of adjacent images such as left and front, and front and right are regularly continuous, but wasteful areas are generated in four corners of the image after the combination. On the other hand, according to the technique as illustrated in Figs. 9B to 9D, the wasteful areas are not generated in the image after the combination, but a continuous boundary and a discontinuous boundary are mixed among the boundaries of the adjacent images.

### Citation List

### Non Patent Literature

NPL 1: JVET Contribution JVET-C0021 the Internet <http://phenix.int-evry.fr/jvet/doc_end_user/documents/3_Geneva/wg11/>
NPL 2: JVET Contribution JVET-D0022 the Internet <http://phenix.int-evry.fr/jvet/doc_end_user/documents/4_Chengdu/wg11/>

### Summary of Invention

It is conceivable that use of the in-loop filter represented by the above-described deblocking filter or sample adaptive offset is effective from the viewpoint of coding efficiency. In addition, in a case where the image obtained by the combination after the capturing by the plurality of cameras as illustrated in Figs. 9B to 9D described above, that is, the image in which the continuous boundary and the discontinuous boundary are mixed among the boundaries in the image is subjected to coding, the coding is naturally performed while the images captured by the respective cameras are associated with tiles. However, according to the existing technique represented by the HEVC, it is only possible to choose whether or not the in-loop filter processing is uniformly applied to all the tile boundaries in the image. That is, it is only possible to choose whether or not the in-loop filter is applied without distinguishing the continuous tile boundary and the discontinuous tile boundary from each other. In the above-described case, when non-application of the in-loop filter is chosen by prioritizing the discontinuous tile boundary, the in-loop filter cannot be applied to the continuous tile boundary where the image quality improvement can be normally expected by the in-loop filter processing. On the other hand, when application of the in-loop filter is chosen by prioritizing the continuous tile boundary, the in-loop filter is applied to the discontinuous tile boundary, and an unnecessary image quality deterioration is caused in a surrounding of the discontinuous tile boundary. Therefore, the present invention has been made to address the above-described issue and aims at enabling adaptive application of the in-loop filter processing to the tile boundary while a continuity of the tile boundary is taken into account.

To address the above-described issue, a coding apparatus according to the present invention has the following configuration. That is, the coding apparatus for performing coding of an image including a plurality of tiles includes determining means for determining, with respect to a plurality of boundaries constituted by the plurality of tiles, whether or not filter processing is performed on pixels adjacent to the boundaries, and coding means for performing coding of control information indicating whether or not the filter processing is performed on the pixels adjacent to the boundaries in accordance with a determining by the determining means with respect to at least two of the plurality of boundaries.

Furthermore, a decoding apparatus according to the present invention has the following configuration. That is, the decoding apparatus for decoding an image including a plurality of tiles from a bit stream includes decoding means for decoding the image, generation means for generating, with respect to a plurality of boundaries constituted by the plurality of tiles, control information indicating whether or not filter processing is performed on pixels adjacent to the boundaries from the bit stream, determining means for determining whether or not the filtering processing is performed on the pixels adjacent to at least a plurality of boundaries in accordance with the control information generated by the generation means, and processing means for performing the filtering processing with respect to the boundaries where the filtering processing is performed which is determined by the determining means.

### Brief Description of Drawings

Fig. 1 is a block diagram illustrating a configuration of an image coding apparatus.
Fig. 2 is a block diagram illustrating a configuration of an image decoding apparatus.
Fig. 3A illustrates an example of a relationship between a continuity of a tile boundary and target pixels of in-loop filter processing.
Fig. 3B illustrates an example of the relationship between the continuity of the tile boundary and the target pixels of the in-loop filter processing.
Fig. 4 is a flow chart illustrating image coding processing in the image coding apparatus.
Fig. 5 is a flow chart illustrating the in-loop filter processing in the image coding apparatus and the image decoding apparatus.
Fig. 6A illustrates an example of a bit stream structure generated by the image coding apparatus and decoded by the image decoding apparatus.
Fig. 6B illustrates an example of the bit stream structure generated by the image coding apparatus and decoded by the image decoding apparatus.
Fig. 7 is a flow chart illustrating decoding processing in the image decoding apparatus.
Fig. 8 is a block diagram illustrating a hardware configuration example of a computer that can be applied to the image coding apparatus and the image decoding apparatus.
Fig. 9A illustrates an arrangement example in which images captured by a plurality of cameras are rearranged to obtain a single image.
Fig. 9B illustrates an arrangement example in which the images captured by the plurality of cameras are rearranged to obtain the single image.
Fig. 9C illustrates an arrangement example in which the images captured by the plurality of cameras are rearranged to obtain the single image.
Fig. 9D illustrates an arrangement example in which the images captured by the plurality of cameras are rearranged to obtain the single image.
Fig. 10A represents a syntax related to tile division information and filter control information of a bit stream generated by the image coding apparatus and decoded by the image decoding apparatus.
Fig. 10B represents the syntax related to the tile division information and the filter control information of the bit stream generated by the image coding apparatus and decoded by the image decoding apparatus.
Fig. 10C represents the syntax related to the tile division information and the filter control information of the bit stream generated by the image coding apparatus and decoded by the image decoding apparatus.

### Description of Embodiments

Hereinafter, the present invention will be described in detail by way of its preferred embodiments with reference to the accompanied drawings. It should be noted that configurations illustrated in the following embodiments are merely examples, and the present invention is not limited to the illustrated configurations.

Hereinafter, embodiments of the present invention on a coding side will be described by using the drawings. According to the present embodiment, in particular, a case where an image illustrated in Fig. 9B is input to perform coding will be described.

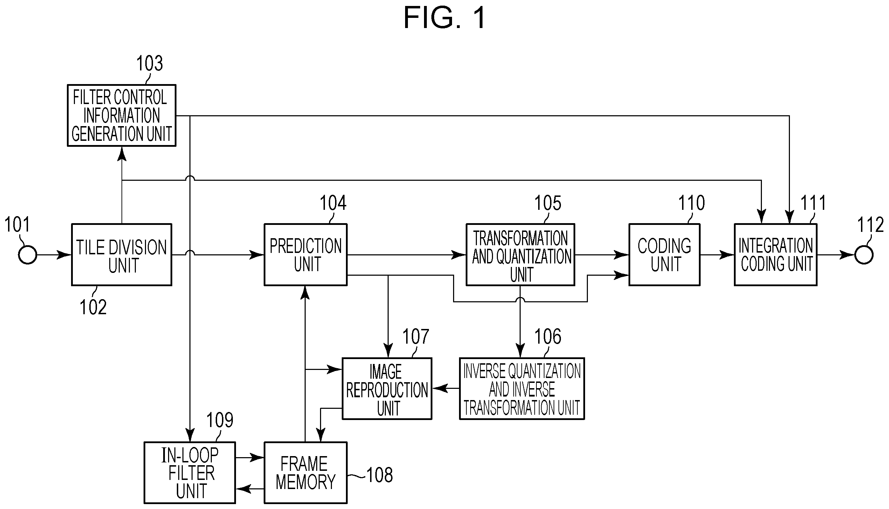

Fig. 1 is a block diagram illustrating an image coding apparatus according to the present embodiment. All of respective blocks in Fig. 1 may be constituted as hardware, or part or all of the blocks may also be constituted as software.

In Fig. 1, a terminal 101 is a terminal to which image data is input.

A tile division unit 102 determines a tile division method for the input image and performs division processing.

A filter control information generation unit 103 generates and outputs filter control information corresponding to information on whether or not in-loop filter processing which will be described below is performed with respect to the pixels on the respective tile boundaries.

A prediction unit 104 performs intra prediction corresponding to intra-frame prediction, inter prediction corresponding to inter-frame prediction, or the like with respect to image data in units of blocks to generate prediction image data. Furthermore, a prediction error is calculated from the input image data and the prediction image data to be output. In addition, information required for the prediction such as, for example, information of a prediction mode is also output together with the prediction error. Hereinafter, this information required for the prediction will be referred to as prediction information.

A transformation and quantization unit 105 performs orthogonal transformation of the prediction error in units of blocks to obtain a transformation coefficient and further performs quantization to obtain a quantization coefficient.

An inverse quantization and inverse transformation unit 106 performs inverse quantization of the quantization coefficient output from the transformation and quantization unit 105 to reproduce the transformation coefficient and further performs inverse orthogonal transformation to reproduce the prediction error.

A frame memory 108 is a memory that stores the reproduced image data.

An image reproduction unit 107 refers to the frame memory 108 as appropriate in accordance with the prediction information output from the prediction unit 104 to generate the prediction image data and generates reproduction image data from the generated prediction image data and the input prediction error to be output.

An in-loop filter unit 109 performs in-loop filter processing such as the deblocking filter or the sample adaptive offset with respect to the reproduction image and outputs the image on which the filter processing has been performed.

A coding unit 110 performs coding of the quantization coefficient output from the transformation and quantization unit 105 and the prediction information output from the prediction unit 104 to generate coded data to be output.

An integration coding unit 111 performs coding of the outputs from the tile division unit 102 and the filter control information generation unit 103 to generate header code data to be stored in a header. The generated header code data forms a bit stream together with the coded data output from the coding unit 110 to be output.

A terminal 112 is a terminal from which the bit stream generated by the integration coding unit 111 is output to the outside.

The coding processing of the image in the image coding apparatus illustrated in Fig. 1 will be described below. According to the present embodiment, a configuration is adopted in which moving image data is input in units of frames, but a configuration may of course be adopted in which still image data for one frame is input.

The image data for one frame which is input from the terminal 101 is input to the tile division unit 102. The image data input at the terminal 101 is set as image data for one frame which has been combined by rearranging N pieces (N ≥ 3) of images. The arrangement of the N pieces (N ≥ 3) of images also includes an arrangement of rotated images. According to the present embodiment, information indicating how many images are arranged and combined in what manner may also be obtained.

The tile division unit 102 determines a tile division method for the input image and divides the input image data into units of tiles in accordance with the determined division method to be output to the prediction unit 104. That is, in addition, the determined tile division method is output to the filter control information generation unit 103 and the integration coding unit 111 as tile division information. While the determining method for the tile division is not particularly limited, a feature of the input image may be used, the information indicating how many images are arranged and combined in what manner as described above may be used, and the determining may be performed by an input from the user. According to the present embodiment, descriptions will be provided while it is assumed that the input image data for one frame is divided along boundaries of N pieces of combined images, and image data including M pieces (M ≥ 2) of boundaries of the tiles is constituted by N pieces (N ≥ 3) of tiles. For example, it is designed that, in a case where coding of the image as illustrated in Fig. 9B is to be performed, the respective images on front, right, back, bottom, left, and top are associated with individual tiles, that is, coding of the image constituted from the six tiles is performed.

Next, the filter control information generation unit 103 determines whether or not the in-loop filter processing is performed with respect to the respective tile boundaries and outputs the information as the filter control information to the in-loop filter unit 109 and the integration coding unit 111. The determining method for the filter control information is not particularly limited, and the feature of the input image may be used, and the determining may be performed the input from the user. In addition, the filter control information generation unit 103 may perform the determining in accordance with information related to a tile division state which is input from the outside or internally calculated and information related to a continuity of the respective tile boundaries. For example, in a case where the coding of the image as illustrated in Fig. 9B is to be performed, it is determined that the coding of the image constituted from the six tiles is performed by the tile division unit 102. In this case, pixel values are continuous on two tile boundaries in the vertical direction (between "front" and "right" and between "right" and "back") existing in a top part of the image and one tile boundary in the horizontal direction (between "front" and "bottom") existing in a left part of the image. On the other hand, the pixels are not continuous on the other four tile boundaries. In the above-described case, the filter control information generation unit 103 outputs information indicating that the in-loop filter processing is performed with regard to the three tile boundaries where the pixels are continuous and information indicating that the in-loop filter processing is not performed with regard to the remaining four discontinuous tile boundary as the filter control information.

The integration coding unit 111 performs coding of the tile division information and the filter control information to respectively generate the tile division information code and the filter control information code. The coding method is not particularly specified, but Golomb coding, arithmetic coding, Huffman coding, or the like can be used.

The prediction unit 104 divides the image data in units of tiles which is input from the tile division unit 102 into a plurality of blocks, and the prediction processing in units of blocks is performed. As a result of the prediction processing, the prediction error is generated and input to the transformation and quantization unit 105. In addition, the prediction unit 104 generates the prediction information to be output to the coding unit 110 and the image reproduction unit 107.

The transformation and quantization unit 105 performs the orthogonal transformation and the quantization of the input prediction error to generate a quantization coefficient. The generated quantization coefficient is input to the coding unit 110 and the inverse quantization and inverse transformation unit 106.

The inverse quantization and inverse transformation unit 106 performs the inverse quantization of the input quantization coefficient to reproduce the transformation coefficient and further performs the inverse orthogonal transformation of the reproduced transformation coefficient to reproduce the prediction error to be output to the image reproduction unit 107.

The image reproduction unit 107 refers to the frame memory 108 as appropriate in accordance with the prediction information input from the prediction unit 104 to reproduce the prediction image. Then, the image data is reproduced from the reproduced prediction image and the reproduced prediction error input from the inverse quantization and inverse transformation unit 106 to be input to the frame memory 108 and stored.

The in-loop filter unit 109 reads out the reproduction image from the frame memory 108 and performs the in-loop filter processing such as the deblocking filter in accordance with the block position of the filter target and the filter control information input from the filter control information 103. Then, the image on which the filter processing has been performed is input to the frame memory 108 again to be stored again. This image on which the filter processing has been performed is used for the inter prediction in the prediction unit 104 or the like.

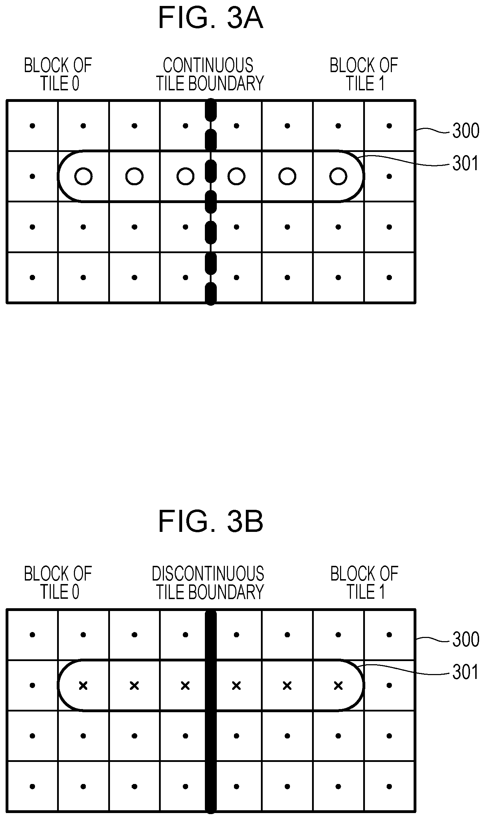

The in-loop filter processing according to the present embodiment will be described by using Figs. 3. Any of the following filter processing is performed in accordance with the position of the block of the filter target and the filter control information. Herein, only the filter processing on the tile boundary will be described, but the filter processing in the pixel positions other than the tile boundary is set to be implemented in accordance with the existing image coding method. In addition, to facilitate the descriptions herein, the block size is set as a 4 × 4 block but is not limited to this.

Fig. 3A illustrates an example in a case where deblocking filter processing is performed while striding a boundary of two 4 × 4 blocks. Two blocks of 4 × 4 pixels exist inside an outer frame 300, and the filter processing is executed with respect to 3 pixels adjacent to tile boundaries of the respective blocks surrounded by a rounded rectangle 301, that is, 6 pixels in total. The block on the left side illustrated in Fig. 3A belongs to a tile 0, and the block on the right side belongs to a tile 1. That is, the left and right blocks are blocks belonging to different tiles, and a boundary of the left and right blocks is also a boundary of the tiles. This tile boundary is set as a tile boundary where the pixel values are continuous as observed in the top part of Fig. 9B (for example, between "front" and "right") or the like. In this case, since the filter control information indicating that the in-loop processing is performed on the tile boundary where the pixels are continuous is input from the filter control information generation unit 103, all of the 6 pixels indicated by a symbol of ○ become targets of the filter processing, the filter processing is performed with respect to all of the 6 pixels.

On the other hand, Fig. 3B is different from Fig. 3A, and the boundary of the left and right tiles is set as the tile boundary where the pixel values are discontinuous as observed in a bottom part of Fig. 9B (for example, between "left" and "top") or the like. In this case, since the filter control information indicating that the in-loop processing is not performed on the tile boundary where the pixels are discontinuous is input from the filter control information generation unit 103, all of the 6 pixels indicated by a symbol of × do not become the targets of the filter processing. Thus, the filter processing is not performed with respect to the 6 pixels.

The deblocking filter has been mentioned according to the present embodiment, but a similar control may of course be performed on the other in-loop filter processing such as an adaptive loop filter or the sample adaptive offset. In addition, according to the present embodiment, the filter processing between the left and right blocks has been described, but the similar processing is also performed between the top and bottom blocks. Furthermore, the example in which the filtering processing is performed on the 3 pixels in the respective blocks has been illustrated, but the number of pixels to be processed is not limited to this. For example, it is also possible to perform asymmetrical filtering processing in which the number of pixels corresponding to the processing targets in the respective blocks differs such as 3 pixels in the block on the left side and 2 pixels in the block on the right side.

While returning to Fig. 1, the coding unit 110 performs the entropy coding of the quantization coefficient generated by the transformation and quantization unit 105 and the prediction information input from the prediction unit 104 in units of blocks to generate the coded data. The entropy coding method is not particularly specified, but Golomb coding, arithmetic coding, Huffman coding, or the like can be used. The generated coded data is output to the integration coding unit 111.

The integration coding unit 111 multiplies the tile division information code and the filter control information code generated prior to the coding processing, the coded data generated by the coding unit, and the like, and the bit stream is formed. Finally, it is output from the terminal 112 to the outside.

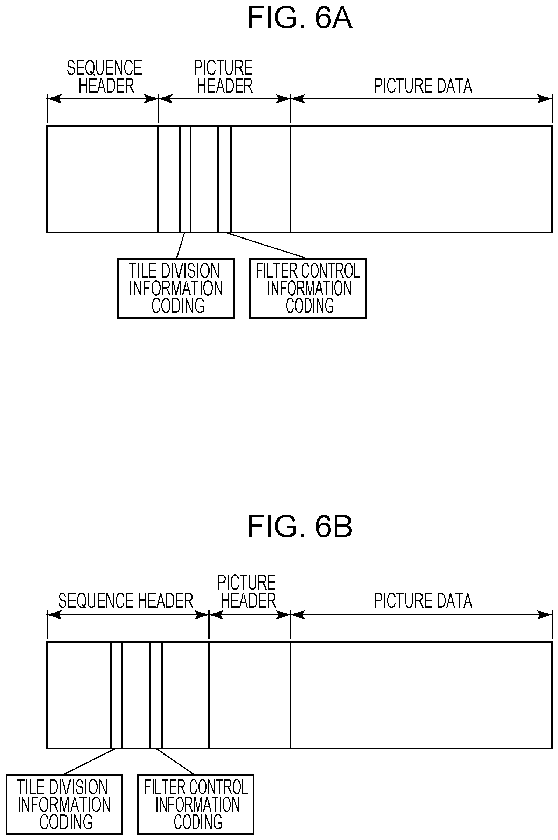

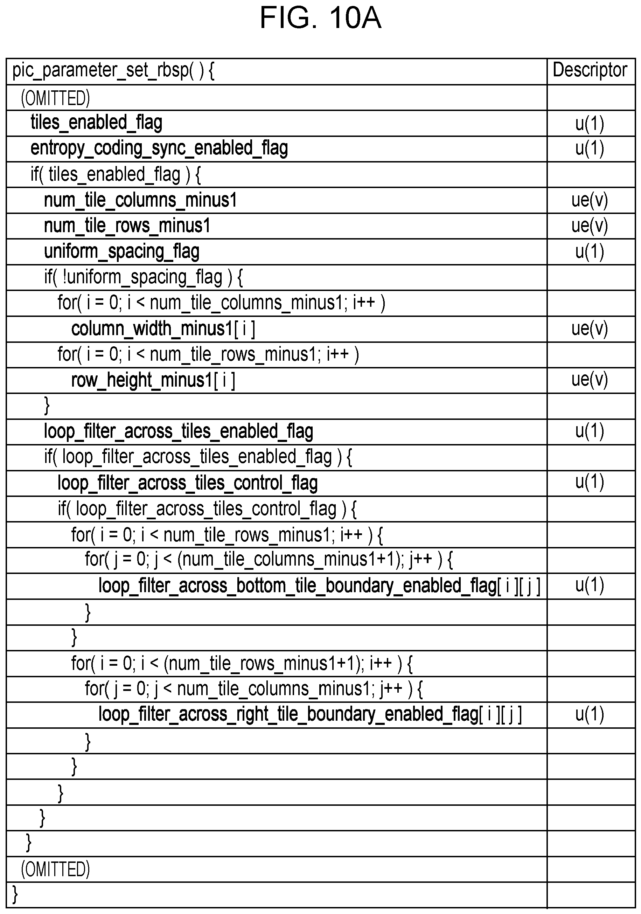

Fig. 6A illustrates an example of the bit stream including the tile division information and filter control information after the coding. The tile division information as the tile division information code and the filter control information as the filter control information code are included in any one of headers such as a sequence and a picture. According to the present embodiment, as illustrated in Fig. 6A, the codes are included in the header part of the picture. Fig. 10A represents an example a syntax structure of the header part of the picture including these codes. Since tiles_enabled_flag is a code indicating the presence or absence of the tile division, and the case has been described in which the image illustrated in Fig. 9B is input to be divided into the six tiles according to the present embodiment, this value becomes 1. Descriptions of entoropy_coding_sync_enabled_flag will be omitted since it is not related to the present embodiment. num_tile_columns_minus1 indicates a value obtained by subtracting 1 from the number of tiles in the horizontal direction. According to the present embodiment, since the three tiles exist in the horizontal direction, this value becomes 2. On the other hand, num_tile_rows_minus1 indicates a value obtained by subtracting 1 from the number of tiles in the vertical direction. According to the present embodiment, since the two tiles exist in the vertical direction, this value becomes 1. uniform_spacing_flag is a code indicating whether or not the sizes of the respective tiles (the numbers of pixels in the vertical and horizontal directions) are matched with each other, and since the sizes of all the tiles are matched with each other according to the present embodiment, this value becomes 1. It should be noted that, when this value is 0, that is, in a case where all the tile sizes are not matched with each other, coding of column_width_minus1 and row_height_minus1 indicating horizontal and vertical sizes of the respective tiles is performed, but the descriptions thereof will be omitted according to the present embodiment. loop_filter_aross_tiles_enabled_flag is a code indicating whether or not the in-loop filter processing on the tile boundary is enabled, but since the in-loop filter processing is enabled on part of the boundaries according to the present embodiment, this value is set as 1.

Coding of the following syntax is only performed when the above-described loop_filter_across_tiles_enabled_flag is 1. loop_filter_across_tiles_control_flag is a code indicating whether or not coding of the information is individually performed which indicates whether or not the in-loop filter processing is performed with respect to each of the tile boundaries. According to the present embodiment, since the acceptance or rejection of the in-loop filter processing individually needs to be set, this value is set as 1.

Furthermore, coding of the following syntax is only performed when the above-described loop_filter_across_tiles_control_flag is 1. loop_filter_across_bottom_tile_boundary_enabled_flag is a code indicating whether or not the in-loop filter processing is performed with respect to the tile boundary on the bottom side of the tiles. According to the present embodiment, since three tiles (front, right, and back) in a row on the top side including the tile boundary on the bottom side exist, the coding of this code is performed three times. That is, the coding of loop_filter_across_bottom_tile_boundary_enabled_flag is performed for each boundary constituted between two tiles on the top and the bottom. Since the tile boundary on the bottom side of the "front" tile is a continuous boundary, this first value becomes 1 indicating that the in-loop filter processing is performed. On the other hand, since the tile boundary on the bottom side of the "right" and "back" tiles is a discontinuous boundary, these second and third values become 0 indicating that the in-loop filter processing is not performed. It should be noted that with regard to the three tiles (bottom, left, and top) in a row on the bottom side, the coding of loop_filter_across_bottom_tile_boundary_enabled_flag is not performed. Next, loop_filter_across_right_tile_boundary_enabled_flag is a code indicating whether or not the in-loop filter processing is performed with respect to the tile boundary on the right side of the tiles. That is, the coding of loop_filter_across_right_tile_boundary_enabled_flag is performed for each boundary constituted between two tiles on the left and the right. According to the present embodiment, since four tiles (front, right, bottom, and left) including the tile boundary on the right side exist, the coding of this code is performed four times. Since the tile boundary on the right side of the "front" and "right" tiles is a continuous boundary, these first and second values become 1 indicating that the in-loop filter processing is performed. On the other hand, since the tile boundary on the right side the "bottom" and "left" tiles is a discontinuous boundary, these third and fourth values become 0 indicating that the in-loop filter processing is not performed. It should be noted that, with regard to the tiles (back and top) existing in a column on the rightmost side, the coding of loop_filter_across_right_tile_boundary_enabled_flag is not performed. That is, the coding of loop_filter_across_bottom_tile_boundary_enabled_flag is performed with regard to the tile boundary inside the image. Similarly, the coding of loop_filter_across_right_tile_boundary_enabled_flag is performed with regard to the tile boundary inside the image. Then, the coding is not performed with regard to the boundary of the tiles constituting an outer circumference.

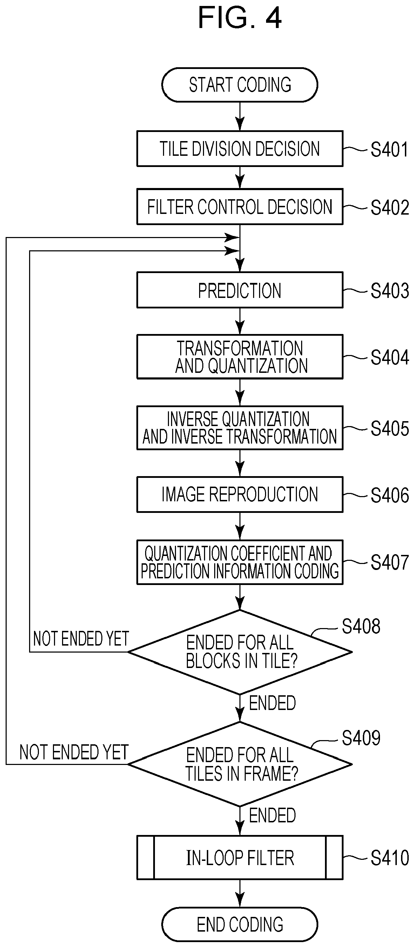

Fig. 4 is a flow chart illustrating the coding processing in the image coding apparatus according to the present embodiment.

First, in step S401, the tile division unit 102 determines a tile division method for the input image and divides the input image data in units of tiles in accordance with the determined division method. In addition, the determined tile division method is set as the tile division information, and the coding of the tile division information is performed by the integration coding unit 111.

In step S402, the filter control information generation unit 103 determines whether or not the in-loop filter processing is performed with respect to the pixels on the respective tile boundaries and sets the information as the filter control information, and the coding of the filter control information is also performed by the integration coding unit 111.

In step S403, the prediction unit 104 cuts the input image data in units of tiles into a plurality of blocks and performs the intra prediction or the inter prediction in units of blocks to generate the prediction information and the prediction image data. Furthermore, the prediction error is calculated from the input image data and the prediction image data.

In step S404, the transformation and quantization unit 105 performs the orthogonal transformation of the prediction error calculated in step S403 to generate the transformation coefficient and further performs the quantization to generate the quantization coefficient.

In step S405, the inverse quantization and inverse transformation unit 106 performs the inverse quantization and the inverse orthogonal transformation of the quantization coefficient generated in step S404 to reproduce the prediction error.

In step S406, the image reproduction unit 107 reproduces the prediction image in accordance with the prediction information generated in step S403. Furthermore, the image data is reproduced from the reproduced prediction image and the prediction error generated in step S405.

In step S407, the coding unit 110 performs coding of the prediction information generated in step S403 and the quantization coefficient generated in step S404 to generate the coded data. In addition, the bit stream is generated while the other coded data is also included.

In step S408, the image coding apparatus performs a determination on whether or not the coding of all the blocks in the tile is ended and proceeds to step S409 when the coding is ended and returns to step S403 by setting the next block as the target when the coding is not ended.

In step S409, the image coding apparatus performs a determination on whether or not the coding of all the tiles in the frame is ended and proceeds to step S410 when the coding is ended and returns to step S403 by setting the next tile as the target when the coding is not ended.

In step S410, the in-loop filter unit 109 performs the in-loop filter processing with respect to the image data reproduced in step S406 to generate the image on which the filter processing has been performed and ends the processing.

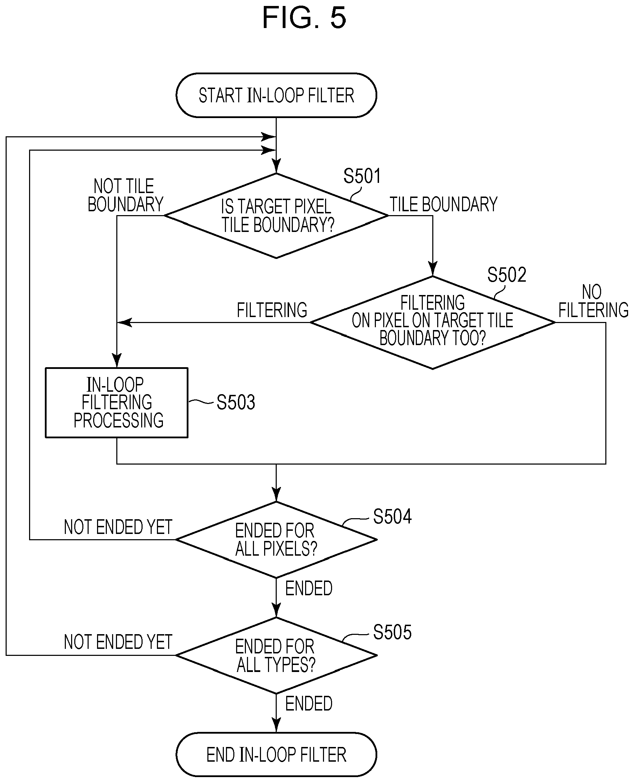

Fig. 5 is a flow chart illustrating a detail of the in-loop filter processing in step S410.

First, in step S501, the in-loop filter unit 109 determines whether or not the target pixels exist on the tile boundary from the positions of the pixels of the in-loop filter target. When it is determined that the target pixels exist on the tile boundary, the flow proceeds to S502, and when the target pixels do not exist, the flow proceeds to S503. In S501, a meaning of the existence on the tile boundary refers to existence on the tile boundary inside the image.

In step S502, the in-loop filter unit 109 determines whether or not the target pixels existing on the tile boundary become targets of filtering in accordance with the filter control information generated in step S402. The in-loop filter unit proceeds to S503 when it is determined that the filtering is performed and proceeds to S504 when it is determined that the filtering is not performed.

In step S503, the in-loop filter unit 109 performs the in-loop filter processing with respect to the target pixels.

In step S504, the in-loop filter unit 109 performs a determination on whether or not the in-loop filter processing on all the pixels is ended and proceeds to step S505 when the processing is ended and returns to step S501 by setting the next pixel as the target when the processing is not ended.

In step S505, the in-loop filter unit 109 performs a determination on whether or not the in-loop filter processing on all the types is ended. The in-loop filter unit ends the in-loop filter processing when the processing is ended and returns to step S501 by setting the next type of the in-loop filter processing as the target when the processing is not ended.

For example, the two of in-loop filter processing such as the deblocking filter and sample adaptive offset are defined in the HEVC, switching of those is executed in this step. Specifically, first, the deblocking filter processing is implemented while all the pixels are set as the targets and thereafter switched to the sample adaptive offset processing, and the flow returns to step S501. In addition, the in-loop filter processing is ended in a case where the sample adaptive offset processing is also ended. According to the present embodiment, the two types of in-loop filter processing such as the deblocking filter and sample adaptive offset similar to the HEVC are executed, but the other in-loop filter processing (such as, for example, the adaptive loop filter) may of course be executed. In addition, the in-loop filter processing order is not limited to these.

With the above-described configuration and operation, particularly in step S410, while it becomes possible to perform the control on the acceptance or rejection of the application of in-loop filter processing for each tile boundary, whether or not the in-loop filter processing is applied to the tile boundary can be chosen in accordance with the continuity of the tile boundary. As a result, since it becomes possible to set in a manner that the in-loop filter processing is applied on the tile boundary where the pixels are continuous and the in-loop filter processing is not applied on the tile boundary where the pixels are discontinuous, the image quality can be improved.

It should be noted that, according to the present embodiment, as illustrated in Fig. 6A, the coding of the tile division information and the filter control information is performed in the picture header part, but the position where the coding is performed is not limited to this. The coding may be performed in the sequence header part of the image as illustrated in Fig. 6B, or the coding may of course be performed in the other position.

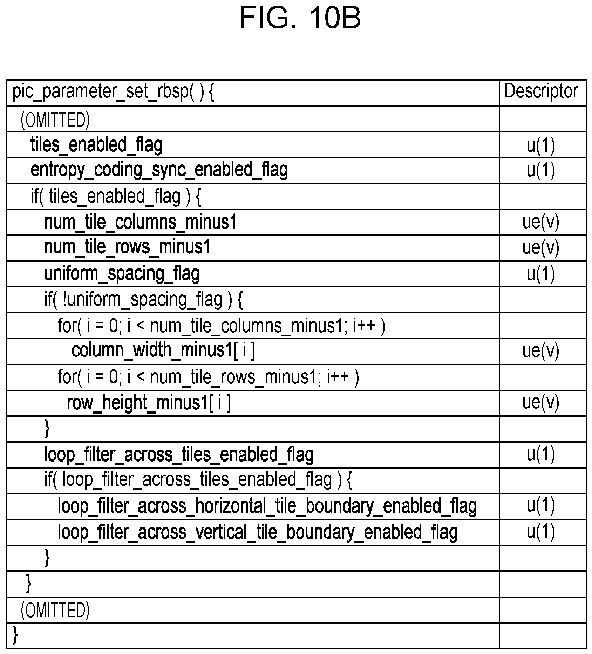

It should be noted that, according to the present embodiment, the coding of the bit stream including the structure of the syntax as illustrated in Fig. 10A is performed, but the structure of the bit stream is not limited to this. For example, the structure of the syntax as illustrated in Fig. 10B may also be included. In Fig. 10A, the coding of the filter control information is performed with respect to the respective tile boundaries, but Fig. 10B illustrates an example of a case where the coding of the respectively common filter control information is performed with respect to all the tile boundaries in the horizontal direction and then all the tile boundaries in the vertical direction. loop_filter_across_horizontal_tile_boundary_enabled_flag is a flag indicating whether or not the in-loop filter processing is performed with respect to all the tile boundaries in the vertical direction in the image. That is, loop_filter_across_horizontal_tile_boundary_enabled_flag is horizontal direction control information common to the plurality of tile boundaries in the horizontal direction. In addition, loop_filter_across_vertical_tile_boundary_enabled_flag is a flag indicating whether or not the in-loop filter is performed with respect to all the tile boundaries in the horizontal direction in the image. That is, loop_filter_across_vertical_tile_boundary_enabled_flag is vertical direction control information common to the plurality of tile boundaries in the vertical direction. For example, in a case where the image illustrated in Fig. 9D is input, when the former (··· horizontal ··· flag) is set as 1 and the latter (··· vertical ··· flag) is set as 0, it is possible to realize filtering control with respect to the tile boundary with the still smaller code amount. That is, in the case of the image in which the plurality of tiles are arranged with respect to a certain direction (the horizontal direction or the vertical direction), the flag including the syntax structure of Fig. 10B is effective in a case where the acceptance or rejection of the application of the in-loop filter processing in each of the tile boundary is the same. In addition, as a modified example of Figs. 10A and 10B, the acceptance or rejection of the application of the in-loop filter processing in one of the horizontal and vertical directions of the tile boundaries may be set by using the flag of Fig. 10B. Then, the acceptance or rejection of the application of the in-loop filter processing may be set by allocating the flag for the respective tile boundaries in the other direction as illustrated in Fig. 10A.

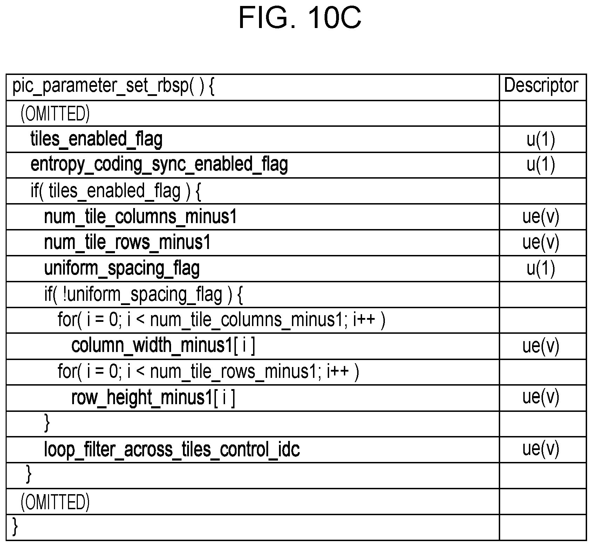

In addition, the syntax structure like Fig. 10C can also be included. Fig. 10C is characterized in that coding of loop_filter_across_tiles_control_idc is performed as the filter control information. loop_filter_across_tiles_control_idc indicates an index corresponding to a particular tile arrangement method. For example, coding of indices in which "1" is associated with Fig. 9B, "2" is associated with Fig. 9C, "3" is associated with Fig. 9D, and the like is performed as the filter control information. The syntax structure of Fig. 10C is effective in a case where arrangements of the six images to be combined to constitute the image for one frame are defined as several formats as illustrated in Figs. 9B to 9D, for example. In the case of the syntax structure of Fig. 10C, the image decoding apparatus is required to grasp the acceptance or rejection of the application of the in-loop filter processing with respect to the respective tile boundaries in the arrangements in Figs. 9B to 9D corresponding to the respective indices. According to this, while the plurality of tile arrangement methods are coped with, it is possible to realize the filtering control with respect to the tile boundary with the still smaller code amount.

In addition, the filtering with respect to the rectangular tile boundary is controlled according to the present embodiment, but the control target is not limited to this. Filtering with respect to a boundary of slices that can also adopt a shape other than the rectangle can be similarly controlled, and the application can also be performed with respect to new processing units other than the tiles and the slices.

In addition, it is supposed that the tile is rectangular in accordance with the existing HEVC according to the present embodiment, but the application can also be performed when the tiles and other processing units adopt other shapes such as a triangle.

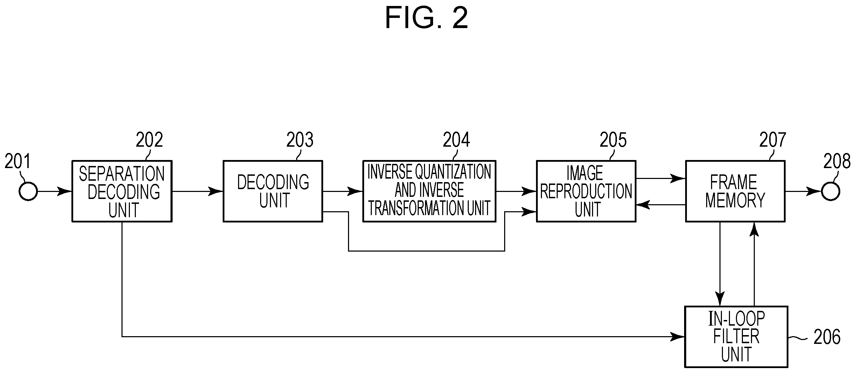

Fig. 2 is a block diagram illustrating a configuration of the image decoding apparatus according to an embodiment of the present invention. According to the present embodiment, the decoding processing of the coding data generated in the image coding apparatus will be described. All of the respective blocks in Fig. 2 may be constituted as hardware, or part or all of the blocks may also be constituted as software.

A terminal 201 is a terminal at which the bit stream after the coding is input. A separation decoding unit 202 separates information related to the decoding processing and the coded data related to the coefficient from the bit stream and further separates the coded data existing in the header part of the bit stream to be decoded. According to the present embodiment, the tile division information and the filter control information are reproduced by the decoding processing to be output to a subsequent stage. That is, the separation decoding unit 202 performs an operation opposite to the integration coding unit 111 of Fig. 1.

A decoding unit 203 decodes the coded data output from the separation decoding unit 202 to reproduce the quantization coefficient and the prediction information.

An inverse quantization and inverse transformation unit 204 inputs the quantization coefficient in units of blocks similarly as in the inverse quantization and inverse transformation unit 106 of Fig. 1, performs the inverse quantization to obtain the transformation coefficient, and further performs the inverse orthogonal transformation to reproduce the prediction error.

A frame memory 207 is a memory that stores at least the image for one frame and stores image data of a reproduced picture.

Similarly as in the image reproduction unit 107 of Fig. 1, an image reproduction unit 205 refers to the frame memory 207 as appropriate in accordance with the input prediction information to generate the prediction image data. Then, the reproduction image data is generated from this prediction image data and the prediction error reproduced by the inverse quantization and inverse transformation unit 204 to be output.

Similarly as in the in-loop filter unit 109 of Fig. 1, an in-loop filter unit 206 performs the in-loop filter processing such as the deblocking filter with respect to the reproduction image and outputs the image on which the filter processing has been performed.

A terminal 208 outputs the image data on which the filter processing has been performed to the outside.

The decoding processing on the image in the image decoding apparatus illustrated in Fig. 2 will be described below. According to the present embodiment, the bit stream generated by the image coding apparatus of Fig. 1 is decoded.

In Fig. 2, the bit stream input from the terminal 201 is input to the separation decoding unit 202. The separation decoding unit 202 separates the information related to the decoding processing and the coded data related to the coefficient from the bit stream and further decodes the coded data existing in the header part of the bit stream. Specifically, the tile division information and the filter control information are reproduced by the decoding processing. According to the present embodiment, first, the tile division information code and the filter control information code are extracted from the picture header of the bit stream illustrated in Fig. 6A to be decoded. It should be noted that the picture header part uses the syntax structure illustrated in Fig. 10A in the following explanation. First, the tiles_enabled_flag code is decoded, and a value 1 indicating that the tile division is used is obtained. Descriptions of entoropy_coding_sync_enabled_flag will be omitted since it is not related to the present embodiment. Next, the num_tile_columns_minus1 code is decoded, and a value 2 indicating that the three tiles exist in the horizontal direction is obtained. Furthermore, the num_tile_rows_minus1 code is decoded, and a value 1 indicating that the two tiles exist in the vertical direction is obtained. Subsequently, the uniform_spacing_flag code is decoded, and a value 1 indicating that the sizes of the respective tiles (the numbers of pixels in the vertical and horizontal directions) are matched with each other is obtained. Next, the loop_filter_aross_tiles_enabled_flag code is decoded, and a value 1 indicating that the in-loop filter processing on the tile boundary is enabled is obtained.

Since loop_filter_across_tiles_enabled_flag is 1, the syntax decoding is further continued. The loop_filter_across_tiles_control_flag code is decoded, and a value 1 indicating that the in-loop filter processing is performed with respect to the respective tile boundaries is obtained.

Since loop_filter_across_tiles_control_flag is 1, the syntax decoding is further continued. The loop_filter_across_bottom_tile_boundary_enabled_flag code is decoded, and information indicating whether or not the in-loop filter processing is performed with respect to the tile boundary on the bottom side of each of the tiles is obtained. According to the present embodiment, respective values 1, 0, and 0 are obtained as the information with respect to the three tiles (front, right, and back) including the tile boundary on the bottom side. Next, the loop_filter_across_right_tile_boundary_enabled_flag code is decoded, and information indicating whether or not the in-loop filter processing is performed with respect to the tile boundary on the right side of each of the tiles is obtained. According to the present embodiment, respective values 1, 1, 0, and 0 are obtained as the information with respect to the four tiles (front, right, bottom, and left) including the tile boundary on the right side. The thus obtained filter control information is output to the in-loop filter unit 206. Subsequently, the coded data in units of blocks of the picture data is reproduced to be output to the decoding unit 203.

The decoding unit 203 decodes the coded data to reproduce the quantization coefficient and the prediction information. The reproduced quantization coefficient is output to the inverse quantization and inverse transformation unit 204, and the reproduced prediction information is output to the image reproduction unit 205.

The inverse quantization and inverse transformation unit 204 performs the inverse quantization with respect to the input quantization coefficient to generate the orthogonal transformation coefficient and further performs the application of the inverse orthogonal transformation to reproduce the prediction error. The reproduced prediction information is output to the image reproduction unit 205.

The image reproduction unit 205 refers to the frame memory 207 as appropriate in accordance with the prediction information input from the decoding unit 203 to reproduce a prediction image. The image data is reproduced from this prediction image and the prediction error input from the inverse quantization and inverse transformation unit 204 to be input to the frame memory 207 and stored. The stored image data is used for the reference at the time of the prediction.

The in-loop filter unit 206 reads out the reproduction image from the frame memory 207 similarly to 109 in Fig. 1 and performs the in-loop filter processing such as the deblocking filter in accordance with the filter control information input from the separation decoding unit 202. Then, the image on which the filter processing has been performed is input to the frame memory 207 again. Since the in-loop filter processing according to the present embodiment is the same as the in-loop filter processing in the image coding apparatus of Fig. 1, detailed descriptions will be omitted.

The image on which the filter processing has been performed in the in-loop filter unit 206 is stored in the frame memory 207 again to be eventually output from the terminal 208 to the outside.

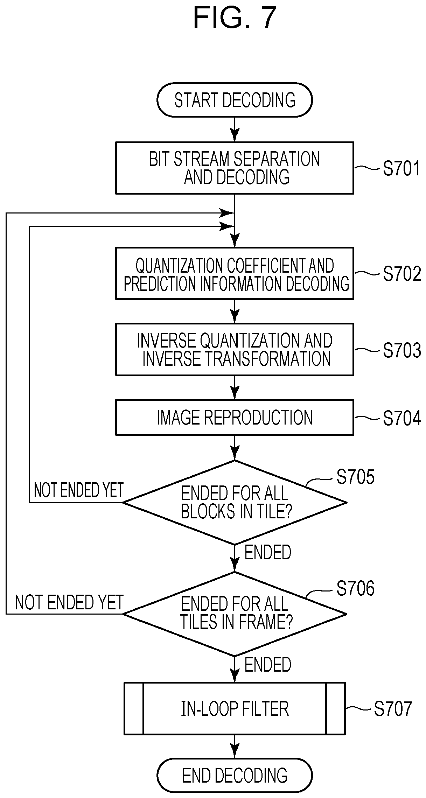

Fig. 7 is a flow chart illustrating the decoding processing on the image in the image decoding apparatus of Fig. 2.

First, in step S701, the separation decoding unit 202 separates the information related to the decoding processing and the coded data related to the coefficient from the bit stream and decodes the coded data in the header part to reproduce the tile division information and the filter control information.

In step S702, the decoding unit 203 decodes the coded data separated in step S701 and reproduces the quantization coefficient and the prediction information.

In step S703, the inverse quantization and inverse transformation unit 204 performs the inverse quantization in units of blocks with respect to the quantization coefficient to obtain the transformation coefficient and further performs the inverse orthogonal transformation to reproduce the prediction error.

In step S704, the image reproduction unit 205 reproduces the prediction image in accordance with the prediction information generated in step S702. Furthermore, the image data is reproduced from the reproduced prediction image and the prediction error generated in step S703.

In step S705, the image reproduction unit 205 or a control unit that is not illustrated in the drawing in the image decoding apparatus performs a determination on whether or not the decoding of all the blocks in the tile is ended. When the decoding is ended, the flow proceeds to step S706, and when the decoding is not ended, the flow returns to step S702 while the next block is set as the target.

In step S706, the image reproduction unit 205 or the control unit that is not illustrated in the drawing in the image decoding apparatus performs a determination on whether or not the coding of all the tiles in the frame is ended. When the coding is ended, the flow proceeds to step S707, and when the coding is not ended, the flow returns to step S702 while the next tile is set as the target.

In step S707, the in-loop filter unit 206 performs the in-loop filter processing with respect to the image data reproduced in step S704 to generate the image on which the filter processing has been performed and ends the processing.

Since a flow chart illustrating the detail of the in-loop filter processing is the same as Fig. 5 illustrating the processing in the image coding apparatus, descriptions thereof will be omitted.

With the above-described configuration and operation, it is possible to decode the bit stream, which has been generated in the image coding apparatus of Fig. 1, with which whether or not the in-loop filter processing is applied to the tile boundary can be chosen in accordance with the continuity of the tile boundary.

It should be noted that the bit stream including the tile division information and the filter control information in the picture header part is decoded as illustrated in Fig. 6A according to the present embodiment, but the coding position of the information is not limited to this. The coding may be performed in the sequence header part of the image as illustrated in Fig. 6B, or the coding may of course be performed in the other position.

It should be noted that the decoding of the bit stream including the structure of the syntax as illustrated in Fig. 10A has been illustrated according to the present embodiment, but the structure of the bit stream to be decoded is not limited to this. For example, the bit stream including the structure of the syntax as illustrated in Fig. 10B may also be decoded. Fig. 10B illustrates an example of a case where the coding of the filter control information common to all the tile boundaries in the horizontal direction and all the tile boundaries in the vertical direction is performed. For example, in a case where the bit stream generated by the coding of the image illustrated in Fig. 9D by the coding apparatus according to a first embodiment is decoded, a value 1 is obtained by decoding the former (··· horizontal ··· flag), and a value 0 is obtained by decoding the latter (··· vertical ··· flag). According to this, it is possible to decode the bit stream in which the coding of the filter control information indicating that the in-loop filter processing is performed with respect to all the tile boundaries in the horizontal direction and the in-loop filter processing is not performed with respect to all the tile boundaries in the vertical direction has been performed with the still smaller code amount.

Furthermore, it is also possible to decode the bit stream including the syntax structure like Fig. 10C. In Fig. 10C, it is possible to associate the index indicated by loop_filter_across_tiles_control_idc with a particular tile arrangement method. For example, it is designed that 1 is associated with Fig. 9B, 2 is associated with Fig. 9C, 3 is associated with Fig. 9D, and the like. According to this, while the greater variety of tile arrangement methods are coped with, it is possible to decode the bit stream that realizes the filtering control with respect to the tile boundary with the still smaller code amount.

It has been described according to the above-described embodiment that the respective processing units illustrated in Fig. 1 and Fig. 2 are constituted by the hardware. However, the processes performed by the respective processing units illustrated in these drawings may also be configured by a computer program.

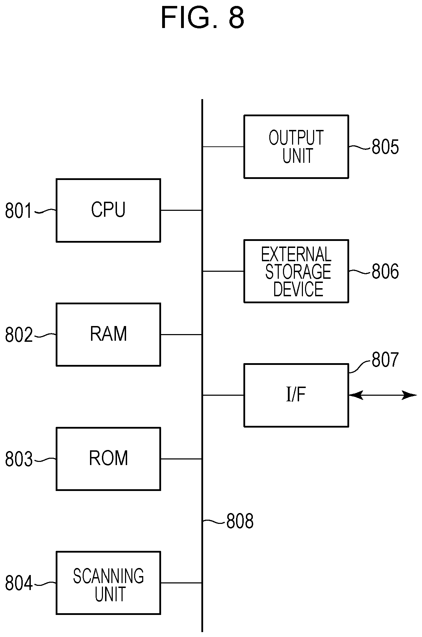

Fig. 8 is a block diagram illustrating a configuration example of hardware of a computer that can be applied to the image coding apparatus and the image decoding apparatus according to the above-described respective embodiments.

A CPU 801 performs a control on an entire computer by using a computer program or data stored in a RAM 802 or a ROM 803 and also executes the above-described respective processes as being performed by an image processing apparatus according to the above-described respective embodiments. That is, the CPU 801 functions as the respective processing units illustrated in Fig. 1 and Fig. 2.

The RAM 802 includes an area for temporarily storing computer program or data loaded from an external storage device 806, data obtained from the outside via an I/F (interface) 807, and the like. Furthermore, the RAM 802 includes a work area used by the CPU 801 when various processes are executed. That is, the RAM 802 can be allocated as, for example, a frame memory or appropriately provide other various areas.

The ROM 803 stores setting data of this computer, a boot program, and the like. An operation unit 804 is constituted by a key board, a mouse, and the like and operated by a user of this computer so that various instructions can be input to the CPU 801. A display unit 805 displays processing results by the CPU 801. In addition, the display unit 805 is constituted by a liquid crystal display, for example.

The external storage device 806 is a large-capacity storage device represented by a hard disc drive device. An OS (operating system) and the computer program for the CPU 801 to realize the functions of the respective units illustrated in Fig. 1 and Fig. 2 are saved in the external storage device 806. Furthermore, various image data as processing targets may be saved in the external storage device 806.

The computer program and the data saved in the external storage device 806 are loaded as appropriate to the RAM 802 in accordance with the control by the CPU 801 to become the processing targets by the CPU 801. A network such as a LAN or the Internet and other apparatuses such as a projection apparatus and a display apparatus can be connected to the I/F 807, and this computer can obtain and transmit various information via this I/F 807. 808 denotes a bus that connects the above-described respective units to one another.

The processes of the flow charts illustrated in Fig. 4, Fig. 5, and Fig. 7 described above are executed by the CPU in accordance with the program by reading out the program stored in the ROM 803 to the RAM 802.

As described above, according to the present invention, it is possible to choose whether or not the in-loop filter processing is applied for each tile boundary. For this reason, the image quality on the continuous tile boundaries in particular can be improved, and it is possible to further improve the coding efficiency.

### (Other Embodiments)

The present invention can also be realized by processing in which a program that realizes one or more functions of the above-described embodiments is supplied to a system or an apparatus via a network or a storage medium. Then, one or more processors in a computer of the system or the apparatus read out the program to be executed. In addition, the present invention can also be realized by a circuit (for example, an ASIC) that realizes one or more functions.

The present invention is used for the coding apparatus and the decoding apparatus that perform the coding and the decoding of the still image and the moving image. In particular, the present invention can be applied to the coding method and the decoding method in which the tile division and the in-loop filter processing are used.

The present invention is not limited to the above-described embodiments, and various alterations and modifications can be made without departing from the spirit and the scope of the present invention. Therefore, the following claims are accompanied to make the scope of the present invention public.

This application claims the benefit of Japanese Patent Application No. 2016-249173 filed December 22, 2016, which is hereby incorporated by reference herein in its entirety.

## Claims

1. A coding apparatus for performing coding of an image including a plurality of tiles, the coding apparatus comprising:
determining means for determining, with respect to a plurality of boundaries constituted by the plurality of tiles, whether or not filter processing is performed on pixels adjacent to the boundaries; and
coding means for performing coding of control information indicating whether or not the filter processing is performed on the pixels adjacent to the boundaries in accordance with a determining by the determining means with respect to at least two of the plurality of boundaries.

2. The coding apparatus according to Claim 1, wherein the plurality of tiles are rectangular and constitute at least two boundaries.

3. The coding apparatus according to Claim 1, wherein the coding means performs the coding of the control information for each boundary constituted between two tiles.

4. The coding apparatus according to Claim 1, wherein the coding means performs the coding of control information in a horizontal direction indicating whether or not the filter processing is performed on pixels adjacent to a boundary in the horizontal direction and control information in a vertical direction indicating whether or not the filtering is performed on pixels adjacent to a boundary in the vertical direction as the control information.

5. The coding apparatus according to Claim 4, wherein the control information in the horizontal direction is control information common to a plurality of tile boundaries in the horizontal direction.

6. The coding apparatus according to Claim 4, wherein the control information in the vertical direction is control information common to a plurality of tile boundaries in the vertical direction.

7. The coding apparatus according to Claim 1, wherein the control information is an index corresponding to an arrangement of a plurality of images combined to constitute an image for one frame.

8. A decoding apparatus for decoding an image including a plurality of tiles from a bit stream, the decoding apparatus comprising:
decoding means for decoding the image;
generation means for generating, with respect to a plurality of boundaries constituted by the plurality of tiles, control information indicating whether or not filter processing is performed on pixels adjacent to the boundaries from the bit stream;
determining means for determining whether or not the filter processing is performed on the pixels adjacent to at least a plurality of boundaries in accordance with the control information generated by the generation means; and
processing means for performing the filter processing with respect to the boundaries where the determining means determines that the filter processing is performed.

9. The decoding apparatus according to Claim 8, wherein the plurality of tiles are rectangular and constitute at least two boundaries.

10. The decoding apparatus according to Claim 8, wherein the generation means generates the control information for each boundary constituted between two tiles.

11. The decoding apparatus according to Claim 8, wherein the generation means generates control information in a horizontal direction indicating whether or not the filter processing is performed on pixels adjacent to a boundary in the horizontal direction and control information in a vertical direction indicating whether or not the filtering is performed on pixels adjacent to a boundary in the vertical direction as the control information.

12. The decoding apparatus according to Claim 11, wherein the control information in the horizontal direction is control information common to a plurality of tile boundaries in the horizontal direction.

13. The decoding apparatus according to Claim 11, wherein the control information in the vertical direction is control information common to a plurality of tile boundaries in the vertical direction.

14. The decoding apparatus according to Claim 8, wherein the control information is an index corresponding to an arrangement of a plurality of images combined to constitute an image for one frame.

15. A coding method for performing coding of an image including a plurality of tiles, the coding method comprising:
a determining step of determining, with respect to a plurality of boundaries constituted by the plurality of tiles, whether or not filter processing is performed on pixels adjacent to the boundaries; and
a coding step of performing coding of control information indicating whether or not the filter processing is performed on the pixels adjacent to the boundaries in accordance with a determining in the determining step with respect to at least two of the plurality of boundaries.

16. A decoding method for decoding an image including a plurality of tiles from a bit stream, the decoding method comprising:
a decoding step of decoding the image;
a generation step of generating, with respect to a plurality of boundaries constituted by the plurality of tiles, control information indicating whether or not filter processing is performed on pixels adjacent to the boundaries from the bit stream;
a determining step of determining whether or not the filter processing is performed on the pixels adjacent to at least a plurality of boundaries in accordance with the control information generated in the generation step; and
a processing step of performing the filter processing with respect to the boundaries where it is determined in the determining step that the filter processing is performed.

17. A program for causing a computer to execute the processing of the coding apparatus according to any one of Claims 1 to 7.

18. A program for causing a computer to execute the processing of the decoding apparatus according to any one of Claims 8 to 14.
